# FASCICULE DE BREVET EUROPEEN

(11) **EP 3 540 083 B1**
(45) Date de publication et mention de la délivrance du brevet: **31.03.2021**
(21) Numéro de dépôt: 19161926.1
(22) Date de dépôt: 11.03.2019
(51) Int. Cl.: C22B 59/00, C22B 1/00, C22B 3/44, C22B 7/00, H01M 10/54

(54) **PROCÉDÉ DE RÉCUPÉRATION SÉLECTIVE D'AU MOINS UNE TERRE RARE PRÉSENTE DANS UN DÉCHET ET PROCÉDÉ DE VALORISATION D'UN DÉCHET LE METTANT EN OEUVRE**
VERFAHREN ZUR SELEKTIVEN RÜCKGEWINNUNG MINDESTENS EINER SELTENEN ERDE, DIE IN EINEM ABFALL ENTHALTEN IST, UND VALORISIERUNGSVERFAHREN EINES ABFALLS, BEI DEM ES ANGEWENDET WIRD
METHOD FOR SELECTIVE RECOVERY OF AT LEAST ONE RARE EARTH PRESENT IN WASTE AND WASTE RECOVERY METHOD IMPLEMENTING SAME

(30) Priorité: 12.03.2018 FR 1852119
(43) Date de publication de la demande: 18.09.2019
(73) Titulaire: Commissariat à l'énergie atomique et aux énergies alternatives, 75015 Paris (FR)
(72) Inventeur: BILLY, Emmanuel, 38054 GRENOBLE Cedex 09 (FR); BARTHELEMY, Sandrine, 38054 GRENOBLE Cedex 09 (FR)
(74) Mandataire: Brevalex

(56) Documents cités:
- JP-A- S5 489 904
- RU-C1- 2 431 691
- US-A- 5 129 945
- AMMANN P: "Economic considerations of battery recycling based on the Recytec process", JOURNAL OF POWER SOURCES, ELSEVIER SA, CH, vol. 57, no. 1, 12 septembre 1995 (1995-09-12), pages 41-44, XP004044323, ISSN: 0378-7753, DOI: 10.1016/0378-7753(95)02237-6
- PIETRELLI L ET AL: "Rare earths recovery from NiMH spent batteries", HYDROMETALLU, ELSEVIER SCIENTIFIC PUBLISHING CY. AMSTERDAM, NL, vol. 66, no. 1-3, 1 octobre 2002 (2002-10-01), pages 135-139, XP004382379, ISSN: 0304-386X, DOI: 10.1016/S0304-386X(02)00107-X
- Nathan Henderson: "Metal Hydrides for NiMH Battery Applications", Material Matters, Volume 6, Number 2, 31 décembre 2011 (2011-12-31), pages 48-54, XP55602198, Extrait de l'Internet: URL:https://www.sigmaaldrich.com/content/d am/sigma-aldrich/materials-science/materia l-matters/material_matters_v6n2.pdf [extrait le 2019-07-03]

## Description

### DOMAINE TECHNIQUE

L'invention relève du domaine de la valorisation de déchets comprenant une ou plusieurs terres rares.

Plus spécifiquement, elle se rapporte à un procédé qui permet de récupérer sélectivement au moins une terre rare présente dans un déchet choisi parmi les piles nickel-hydrure métallique (ou Ni-MH) usagées et les accumulateurs électrochimiques (ou batteries) Ni-MH usagés, ainsi qu'à un procédé qui permet de valoriser ce déchet et qui met en œuvre ce procédé de récupération.

### ÉTAT DE LA TECHNIQUE ANTÉRIEURE

Les batteries Ni-MH comprennent une électrode positive à base d'hydroxyde de nickel (NiOOH/Ni(OH)₂) et une électrode négative qui sont isolées électriquement et physiquement par un séparateur (de type nylon) rempli d'un électrolyte concentré en hydroxyde de potassium (KOH 8,7 M). Les électrodes positives et négatives sont stables en milieu basique à des potentiels de +0,49 V et -0.8 V *vs* ENH.

L'électrode négative comprend un composé intermétallique hydrurable de type ABₙ (ABs, AB₂, AB₃, ...). Les composés de type ABs sont les plus utilisés. Le composé NiLas a, pendant longtemps, été largement répandu. Récemment, pour des raisons électrochimiques et économiques, le nickel est multi-substitué par d'autres éléments (Mn, Al, Co, ...) et le lanthane est remplacé par un mélange de terres rares, appelé mischmétal (Mm) et comprenant du lanthane (La), du cérium (Ce), du néodyme (Nd) et du praséodyme (Pr). Pour les applications industrielles, les électrodes négatives des batteries Ni-MH sont de type (Mm)Ni_{3,55}Mn_{0,4}Al_{0,3}Co_{0,75}.

Les quantités de métaux présents dans les batteries Ni-MH ont été évaluées par le ministère de l'énergie américain (Critical Materials Strategy, 2011) pour un ensemble de 28 modules de 1040 g chacun. Cela correspond au dispositif nécessaire (puissance, tension) au bon fonctionnement d'une Toyota Prius™ 2010 de troisième génération. Le tableau I suivant rassemble les quantités des métaux présents dans les batteries Ni-MH en considérant deux hypothèses, l'une haute, correspondant aux quantités actuellement utilisées, et l'autre basse, correspondant à une technologie plus économe attendue dans les années à venir.

**Tableau I**

| **Eléments** | **Masse par batterie (kg)** | |
|---|---|---|
| | **Hypothèse haute** | **Hypothèse basse** |
| **Lanthane** | 0,73 | 0,49 |
| **Cérium** | 1,03 | 0,69 |
| **Néodyme** | 0,31 | 0,20 |
| **Praséodyme** | 0,10 | 0,07 |
| **Nickel** | 3,20 | 2,13 |
| **Cobalt** | 0,66 | 0,44 |
| **Manganèse** | 0,34 | 0,23 |
| **Aluminium** | 0,13 | 0,09 |
| **TOTAL** | **6,5** | **4,33** |

Pour des raisons évidentes, la récupération, non seulement des terres rares mais aussi du nickel contenus dans les batteries Ni-MH usagées, présente un intérêt indéniable que ce soit sur le plan économique, au regard du coût élevé des terres rares, ou sur le plan environnemental.

De nombreux procédés ont déjà été proposés pour le recyclage des terres rares présentes dans des batteries Ni-MH usagées.

Classiquement, ces batteries sont soumises dans un premier temps à des traitements physiques et/ou mécaniques, par exemple à des opérations de démantèlement et de broyage, puis sont soumises à un traitement chimique en phase humide de type hydrométallurgique.

Le traitement chimique comprend une étape de dissolution ou lixiviation - ces deux termes étant considérés comme équivalents et donc interchangeables dans ce qui suit - puis une succession d'étapes de séparation des éléments métalliques.

Par exemple, dans le brevet US 5,858,061, ci-après référence [1], les débris d'une batterie Ni-MH sont dissous en milieu sulfurique concentré (de 2 à 2,5 mol/L, soit un pH < 0). Après réduction du fer ferrique Fe³⁺ présent dans le lixiviat en fer ferreux Fe²⁺, le pH de ce lixiviat est augmenté entre 1,5 et 2 par addition d'une solution aqueuse saturée en soude ou en hydroxyde d'ammonium de manière à séparer les terres rares sous la forme d'un précipité de sulfate double. Des étapes complémentaires permettent de récupérer tout d'abord le fer et, éventuellement, l'aluminium par précipitation, puis les autres éléments métalliques (Zn, Cd, Mn, ...) par extraction liquide-liquide de manière à ce qu'il ne reste plus que du cobalt et du nickel en solution. Ce cobalt et ce nickel sont ensuite précipités sous la forme d'hydroxydes ou de carbonates ou soumis à une étape d'électrolyse pour former un alliage cobalt/nickel.

Dans le brevet US 6,110,433, ci-après référence **[2],** des batteries Ni-MH usagées sont soumises à un prétraitement mécanique (broyage/tamisage) pour obtenir une fraction fine dans laquelle se concentrent les éléments métalliques à valoriser (ou « black mass »). Cette fraction est ensuite dissoute dans un mélange d'acide sulfurique et de peroxyde d'hydrogène (pH < 1). Après réduction du fer ferrique Fe³⁺ présent dans le lixiviat en fer ferreux Fe²⁺, une base telle que la soude est ajoutée pour amener le pH à une valeur entre 1,5 et 2, ce qui provoque la précipitation sélective des terres rares sous la forme d'un sulfate double. Comme dans la référence **[1],** des étapes complémentaires permettent de récupérer tout d'abord le fer et, éventuellement, l'aluminium par précipitation puis les autres éléments métalliques (Zn, Cd, Mn, ...) par extraction liquide-liquide de manière à ce qu'il ne reste plus que du cobalt et du nickel en solution.

Dans la demande de brevet EP 2 597 164, ci-après référence **[3],** les matériaux actifs des électrodes positives et négatives de batteries Ni-MH usagées sont récupérés et soumis à une première étape de lixiviation en milieu sulfurique à une température égale ou supérieure à 60°C. Après refroidissement du lixiviat, les terres rares présentes dans ce lixiviat sont cristallisées dans une deuxième étape sous la forme d'un précipité de sulfates doubles par addition d'un sulfate alcalin. Après recueil de ce précipité, le nickel et le cobalt encore présents dans le lixiviat peuvent à leur tour être récupérés par addition d'un agent sulfurisant.

Dans la demande de brevet EP 2 781 609, ci-après référence **[4],** des débris contenant des terres rares et provenant, par exemple, d'une batterie Ni-MH sont soumis à une première étape de lixiviation dans un acide minéral ne contenant pas d'ions sulfates tel que l'acide chlorhydrique. Un sel soluble dans l'eau, lui aussi exempt d'ions sulfates tel qu'un chlorure métallique, est ajouté à la solution de lixiviation pour que les terres rares ne précipitent pas au cours de cette première étape. Cette combinaison acide/sel vise à réduire la quantité d'eau libre en solution et à favoriser ainsi la précipitation des terres rares durant la seconde étape de traitement. Cette seconde étape consiste à ajouter un sulfate d'un métal alcalin au lixiviat, ce qui provoque la précipitation des terres rares sous la forme de sulfates doubles. La réaction est préférentiellement réalisée en température (50°C à 100°C) pendant 20 à 60 minutes et sous agitation.

Il s'avère que ces procédés de l'état de la technique ne donnent pas satisfaction. En effet :
- les procédés des références **[1]** et **[2]** utilisent de fortes concentrations en acide sulfurique pour obtenir une dissolution des terres rares tout en évitant qu'elles ne précipitent au cours de cette dissolution ; le pH des solutions de lixiviation est donc très faible et des quantités élevées de soude et/ou d'hydroxyde d'ammonium doivent être ensuite ajoutées aux lixiviats pour amener leur pH dans une gamme de valeurs dans laquelle les terres rares peuvent précipiter, ce qui augmente notablement les coûts de mise en œuvre de ces procédés ;
- le procédé de la référence **[3]** utilise également une forte concentration en acide sulfurique pour, là aussi, obtenir une dissolution des terres rares tout en évitant qu'elles ne précipitent au cours de cette dissolution ; de plus, la dissolution des terres rares est réalisée à une température relativement élevée, typiquement de 80°C, ce qui, là également, contribue à augmenter les coûts de mise en œuvre de ce procédé ; tandis que
- le procédé de la référence **[4]** s'affranchit de l'utilisation d'une forte concentration en acide sulfurique pour dissoudre les terres rares mais au prix d'un ajout d'une quantité élevée (4 à 10 mol/L) d'un sel exempt d'ions sulfates à la solution de lixiviation, ce qui n'a donc pas pour effet de réduire les quantités de réactifs utilisées

Petrelli et al., Hydrometallurgy, vol. 66, no. 1-3, 1 octobre 2002, pages 135-139, montrent que en utilisant un procédé hydrométallurgique développé pour la récupération des métaux à partir de batteries usagées, une séparation sélective des RE par précipitation du double sulfate de sodium RE peut être réalisée. La solution de lixiviation a été obtenue en utilisant 2 M acide sulfurique à 20 °C. Un procédé hydrométallurgique divulgué par le document JP S54 89904 comprend les étapes d'une dissolution des déchets de broyage provenant de la fabrication d'aimants permanents dans l'acide sulfurique, et de l'extraction des sels doubles et le sodium REE-Na par précipitation. Ce document divulgue que les étapes mentionnées ci-dessus se déroulent en même temps.

Au surplus, tous ces procédés ont en commun de comprendre au moins deux étapes, voire trois, pour réaliser une récupération sélective des terres rares.

Or, l'équilibre économique d'un procédé visant à récupérer les terres rares présentes dans des déchets et son intérêt environnemental dépendent du nombre d'étapes, de la nature des réactifs utilisés et des quantités dans lesquelles ces réactifs sont utilisés.

Les Inventeurs se sont donc fixé pour but de proposer un procédé de récupération sélective des terres rares présentes dans une pile Ni-MH usagée ou un accumulateur électrochimique Ni-MH usagé, qui soit exempt des inconvénients présentés par les procédés de l'état de la technique et, en particulier, qui mette en œuvre un nombre d'étapes réduit et limite la consommation en réactifs.

Or, dans le cadre de leurs travaux, les Inventeurs ont constaté qu'à rebours des enseignements de l'état de la technique, il est possible de récupérer très efficacement et de manière sélective les terres rares présentes dans un déchet de type pile Ni-MH usagée ou accumulateur électrochimique Ni-MH usagé en réalisant la dissolution de ces terres rares et leur précipitation en une seule étape et avec une consommation en réactifs notablement réduite par rapport à celles prévues dans l'état de la technique.

Et c'est sur cette constatation qu'est basée la présente invention.

### EXPOSÉ DE L'INVENTION

L'invention a donc en premier lieu pour objet un procédé de récupération sélective des terres rares présentes dans un déchet choisi parmi les piles Ni-MH et accumulateurs électrochimiques Ni-MH usagés, qui comprend les étapes de :
a) dissolution du déchet sous forme divisée dans une solution aqueuse acide pour libérer la terre rare dans la solution aqueuse ;
b) précipitation de la terre rare sous la forme d'un sulfate double de terre rare et d'un métal autre qu'une terre rare; et
c) recueil du précipité ;
et qui est caractérisé en ce que les étapes a) et b) sont réalisées simultanément par immersion du déchet sous forme divisée dans une solution aqueuse S1 comprenant de l'acide sulfurique et un sulfate du métal autre que la terre rare et maintien du déchet dans cette solution pendant un temps t, la solution aqueuse S1 présentant un pH croissant en fonction du temps t entre une valeur initiale de pH, pHi, inférieure à 1 et une valeur finale de pH, pHf, au plus égale à 2.

Ainsi, l'invention se distingue fondamentalement des procédés de l'état de la technique en ce que l'on utilise une solution aqueuse comprenant à la fois de l'acide sulfurique et un sulfate métallique, pour simultanément dissoudre le déchet et récupérer la ou les terres rares que ce déchet contient sous la forme de sulfates doubles. Ainsi, la dissolution du déchet, nécessaire à la libération de la ou des terres rares en solution, et la précipitation de cette ou ces terres rares sont réalisées en une seule étape ou étape unitaire.

Dans ce qui précède et ce qui suit, on entend par « terres rares », le scandium (Sc), l'yttrium (Y) ainsi que l'ensemble des lanthanides, ces derniers correspondant aux 15 éléments chimiques répertoriés dans le tableau périodique des éléments de Mendeleïev qui ont un numéro atomique allant de 57 pour le lanthane (La) à 71 pour le lutécium (Lu).

Par ailleurs, les expressions « de ...... à ...... », « allant de ...... à ...... » et « compris(e) entre ...... et ...... » sont équivalentes et entendent signifier que les bornes sont incluses.

Comme précédemment indiqué, la solution aqueuse S1 comprend un sulfate d'un métal qui n'est pas une terre rare, lequel permet de faire précipiter sélectivement la ou les terres rares sous la forme de sulfates doubles.

Par ailleurs, la solution aqueuse S1 comprend comme acide, de l'acide sulfurique qui, outre de présenter l'avantage d'être un acide peu coûteux, permet de fournir des espèces sulfates en plus de celles qui sont apportées par le sulfate métallique.

L'utilisation d'acide sulfurique conjointement avec un sulfate métallique conduit à une réaction exothermique, ce qui augmente la limite de solubilité des terres rares en solution aqueuse.

Conformément à l'invention, le sulfate métallique est avantageusement un sulfate d'un métal alcalin, la présence d'un métal alcalin permettant, en effet, de diminuer la limite de solubilité des sulfates doubles de terres rares en solution aqueuse et, dans le cas où le déchet contient lui-même un ou des métaux alcalins, de favoriser la réactivité de ce déchet.

Le sulfate d'un métal alcalin est, de préférence, un sulfate de sodium (Na₂SO₄) ou de potassium (K₂SO₄) et, mieux encore, un sulfate de sodium.

La solution aqueuse S1 présente préférentiellement une concentration en sulfate métallique allant de 0,01 mole à 1 mole de sulfate métallique par litre de solution.

En effet, une concentration en sulfate métallique inférieure à 0,01 mol/L diminue le pouvoir de précipitation, alors qu'une concentration en sulfate métallique supérieure à 1 mol/L présente un faible bénéfice pour la précipitation des terres rares dès lors que le déchet à traiter contient lui-même des métaux alcalins. Or, les piles et accumulateurs électrochimiques Ni-MH contiennent un ou plusieurs métaux alcalins, typiquement du sodium ou du potassium, provenant de l'électrolyte. La présence de ces métaux alcalins dans le déchet est donc, dans le cadre de l'invention, avantageusement mise à profit pour réduire la quantité de sulfate métallique devant être ajoutée à la solution aqueuse S1 pour atteindre la limite de solubilité des sulfates doubles de terres rares en solution aqueuse et, partant, une séparation sélective de ces terres sous la forme d'un précipité de sulfates doubles, notamment du type NaTR(SO₄)₂•xH₂O ou KTR (SO₄)₂•xH₂O.

De manière particulièrement avantageuse, la concentration du sulfate métallique dans la solution aqueuse S1 est de 0,1 mole par litre de solution.

Conformément à l'invention, la solution aqueuse S1 est, de préférence, dépourvue de tout agent oxydant additionnel.

L'immersion et le maintien du déchet dans la solution aqueuse S1 s'accompagne d'une augmentation du pH initial, pHi, de cette solution.

De ce fait, le rapport entre la masse de déchet qui est immergé dans la solution aqueuse S1 et le volume de cette solution, ou rapport kg_{solide}/L_{liquide}, et la concentration de l'acide sulfurique dans la solution aqueuse S1 sont correctement choisis - ce que saura faire un homme du métier - pour que, en fonction de la teneur en terres rares du déchet, le pH de la solution aqueuse S1, qui est initialement inférieur à 1, atteigne une valeur entre 1 et 2 de sorte à déplacer favorablement l'équilibre de la réaction vers la précipitation sélective des terres rares sans toutefois que la valeur de ce pH excède 2 pour éviter une co-précipitation du fer. En effet, l'augmentation du pH au voisinage de 2 permet de disposer de 50% des ions sulfates présents en solution pour la précipitation des terres rares contre seulement 1,6% si on se place à pH 0,2.

Ainsi, par exemple, pour 1 litre d'eau auquel est ajouté de l'acide sulfurique concentré à 96% et dans lequel est immergée une quantité de déchet dans un rapport kg_{solide}/L_{liquide} de 15% à 20% (soit 0,15 kg à 0,20 kg de déchet), le rapport entre la masse de déchet et le volume d'acide sulfurique, ou rapport kg_{solide}/L_{acide}, est avantageusement compris entre 1,2 et 1,6 et, mieux encore, égal à 1,4. Il appartient à un homme du métier d'adapter ce rapport notamment au regard de la nature du déchet à traiter (pile ou accumulateur électrochimique), de la quantité de déchet à traiter et de la teneur en terres rares de ce déchet.

Bien entendu, il est possible d'acidifier au cours du déroulé des étapes a) et b) la solution aqueuse A1 par un ou plusieurs ajouts d'acide sulfurique s'il est observé que l'augmentation du pH de cette solution tend à amener ce pH à une valeur supérieure à 2, et d'asservir le pH de la solution aqueuse A1 en temps réel pour qu'il n'excède pas 2.

Conformément à l'invention, les étapes a) et b) sont, de préférence, réalisées sous air, à température ambiante, c'est-à-dire à une température typiquement comprise entre 20°C et 25°C, et sous agitation. De préférence, le déchet est maintenu immergé dans la solution aqueuse S1 pendant 1 heure à 24 heures, par exemple 4 heures.

Typiquement, à l'issue de ces étapes, au moins 90% massiques, de préférence au moins 95% massiques et, mieux encore, au moins 98% massiques de la ou des terres rares initialement présentes dans le déchet se retrouvent sous la forme d'un précipité de sulfates doubles.

Conformément à l'invention, lors de son immersion dans la solution aqueuse S1, le déchet se présente, de préférence, sous la forme d'une poudre, ou « black mass », formée de particules dont la plus grande dimension est avantageusement au plus égale à 500 µm et, mieux encore, est de 20 µm à 500 µm. La taille des particules formant la poudre peut être déterminée par diffraction laser, par exemple au moyen d'un granulomètre à diffraction laser Mastersizer™ tel que commercialisé par la société MALVERN Instruments.

Pour obtenir le déchet sous forme divisée et, en particulier, sous la forme d'une poudre, l'invention prévoit, préalablement à l'étape a), de soumettre le déchet à :
- un traitement thermique, puis
- un broyage, par exemple au moyen d'un broyeur à couteaux, et, éventuellement, un tamisage du broyat.

Le traitement thermique peut notamment consister en une pyrolyse réductrice pour une température comprise entre 500°C et 1200°C.

En plus des avantages précités, le procédé de récupération d'au moins une terre rare de l'invention permet de s'affranchir de toute utilisation d'une base telle que la soude pour obtenir un pH propice à la précipitation sélective des terres rares. Il permet également d'augmenter la quantité de déchet à traiter par litre de solution aqueuse (par exemple, de plus de 300%) puisque la dissolution et la précipitation sélective dans une même solution ne requière pas de garder les terres rares solubles, après leur dissolution : elles peuvent être précipitées au fur et à mesure de leur dissolution.

Ce procédé peut donc avantageusement mis à profit pour valoriser une pile Ni-MH usagée ou un accumulateur électrochimique Ni-MH usagé.

Aussi, l'invention a-t-elle également pour objet un procédé de valorisation d'un déchet choisi parmi les piles Ni-MH et accumulateurs électrochimiques Ni-MH usagés, qui comprend les étapes de :
i) récupération de la terre rare sous la forme d'un précipité de sulfate double de terre rare et d'un métal autre qu'une terre rare par un procédé de récupération tel que précédemment défini ;
ii) dissolution du précipité de sulfate double dans une solution aqueuse S2 comprenant de l'acide oxalique, moyennant quoi on obtient un précipité d'oxalate de terre rare ;
iii) recueil du précipité d'oxalate de terre rare; et
iv) calcination du précipité de terre rare, moyennant quoi on obtient un oxyde de terre rare.

Conformément à l'invention, la solution aqueuse S2 présente, de préférence, une concentration en acide oxalique allant de 0,01 mole à 0,5 mole par litre de solution. En effet, une concentration inférieure à 0,01 mol/L diminue le pouvoir de conversion des sulfates doubles de terres rares en oxalates de terres rares tandis qu'une concentration supérieure à 0,5 mol/L présente un faible bénéfice pour cette conversion tout en augmentant drastiquement les risques de voir le nickel ou d'autres éléments métalliques précipiter sous la forme d'oxalates, conjointement avec la ou les terres rares.

De manière particulièrement avantageuse, la concentration de l'acide oxalique dans la solution aqueuse S2 est égale à 0,2 mole par litre de solution.

Par ailleurs, le rapport entre la masse de précipité de sulfate double et le volume de solution aqueuse S2, ou rapport kg_{solide}/L_{liquide}, est avantageusement compris entre compris entre 1% à 5% et, de préférence, égal à 2,5%.

L'étape ii) est avantageusement réalisée à une température allant de 20°C à 80°C, préférence étant donnée à une température allant de 50°C à 60°C, et sous agitation. La durée de cette étape est typiquement de 1 heure à 4 heures, par exemple de 2 heures.

L'étape iv) est, quant-à-elle, de préférence réalisée sous air, à une température allant de 800°C à 1000°C, par exemple de l'ordre de 900°C, et pendant une durée préférentiellement de 1 heure à 5 heures, typiquement de 2 heures.

L'invention sera mieux comprise à la lumière du complément de description qui suit et qui se réfère aux figures annexées.

Il va de soi toutefois que ce complément de description n'est donné qu'à titre d'illustration de l'objet de l'invention et ne doit en aucun cas être interprété comme une limitation de cet objet.

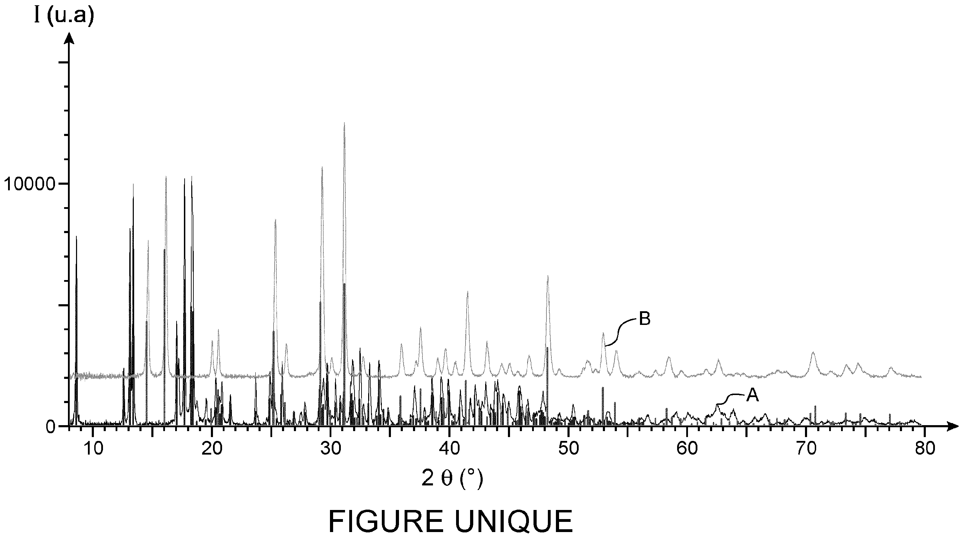

### BRÈVE DESCRIPTION DE LA FIGURE

La figure unique représente le diffractogramme des rayons X de sulfates doubles de terres rares obtenus par un mode de réalisation particulier du procédé de l'invention (diffractogramme A) ainsi que le diffractogramme des rayons X d'oxalates de terres rares obtenus par conversion de ces sulfates en milieu oxalique (diffractogramme B).

### EXPOSÉ DÉTAILLÉ D'UN MODE DE MISE EN ŒUVRE PARTICULIER

L'exemple qui suit porte sur la mise en œuvre du procédé de valorisation d'un déchet de l'invention pour valoriser une batterie Ni-MH.

### Réduction du déchet à l'état de poudre :

Une batterie Ni-MH est soumise à un traitement thermique (pyrolyse réductrice à 500-1200°C) pour retirer l'électrolyte qu'elle renferme et sécuriser cette batterie.

Puis, la batterie est soumise à un broyage suivi d'un tamisage pour obtenir une poudre, ou « black mass », concentrée en terres rares et autres éléments métalliques et dont les particules ont la plus grande de leurs trois dimensions qui ne dépasse pas 500 µm.

La composition en éléments métalliques de cette poudre, telle que déterminée par spectrométrie à plasma à couplage inductif (ICP) sur un échantillon dissous dans de l'acide sulfurique, est présentée dans le tableau II ci-après.

**Tableau II**

| **Composition (% massique)** | | | | | | | | | |
|---|---|---|---|---|---|---|---|---|---|
| **Ce** | **La** | **Nd** | **Ni** | **Co** | **Mn** | **Fe** | **Al** | **Na** | **K** |
| 8,279 | 6,646 | 2,592 | 40,769 | 6,661 | 2,987 | 1,791 | 1,035 | 0,512 | 2,665 |

### Récupération des terres rares présentes dans la poudre :

13,6 g de poudre sont immergés dans 80 mL d'une solution aqueuse comprenant de l'acide sulfurique, dans un rapport de 1,31 gramme d'H₂SO₄ à 96% par gramme de poudre, et comprenant 0,1 mol/L de sulfate de sodium (soit un rapport masse de poudre en g/volume de liquide en mL de 17%). La solution aqueuse est maintenue sous air, à 20°C et sous agitation (200 tours/min) pendant 4 heures. Le pH final de cette solution est de 1,3, ce qui permet d'éviter la co-précipitation du fer.

Un précipité se forme qui est formé de sulfates doubles de terres rares.

Ce précipité est récupéré par filtration et le filtrat est soumis à une analyse de la solution par spectrométrie à plasma à couplage inductif (ICP). Cette analyse, dont les résultats sont présentés dans le tableau III ci-après, montre que la dissolution de la poudre a permis de dissoudre plus de 98% massiques des éléments métalliques initialement présents et que 95% massiques des terres rares se retrouvent dans le précipité. Une concentration résiduelle en terres rares subsiste et ces terres rares pourront être récupérées en soumettant le filtrat à un nouveau cycle de traitement (cf. ci-après).

**Tableau III**

| **Composition du filtrat (g/L)** | | | | | | | |
|---|---|---|---|---|---|---|---|
| **Ce** | **La** | **Nd** | **Ni** | **Co** | **Mn** | **Fe** | **Al** |
| 0,72 | 0,78 | 0,30 | 78,51 | 13,03 | 5,88 | 2,87 | 1,71 |

### Conversion des sulfates doubles de terres rares en oxalates de terres rares :

Le précipité de sulfates doubles obtenu précédemment est lavé à l'eau et ajouté à hauteur de 2,5% massique dans de l'eau comprenant 0,1 mol/L d'acide oxalique et préalablement chauffée à 60°C. L'ensemble est maintenu à cette température et sous agitation (400 rpm) pendant 2 heures. Un précipité se forme qui est composé d'oxalates de terres rares.

La conversion en oxalates de terres rares est complète comme le montre le diffractogramme B de la figure qui se caractérise par une absence de pics à 2θ = 14° et 2θ = 16°, caractéristiques des doubles sulfates de terres rares (cf. diffractogramme A).

### Conversion des oxalates de terres rares en oxydes de terres rares :

Après récupération par filtration et lavage à l'eau du précipité obtenu à l'étape précédente, celui-ci est introduit dans un four sous air durant 2 heures à 900°C pour être calciné sous la forme d'un oxyde de terres rares.

### Récupération du nickel :

Le filtrat obtenu à l'étape précédente est additionné de soude jusqu'à amener son pH à une valeur de 8, ce qui provoque la précipitation du nickel sous la forme d'un hydroxyde de nickel.

Après récupération par filtration et lavage à l'eau de ce précipité, le filtrat être soumis à un nouveau cycle de traitement en vue de récupérer les terres rares résiduelles, auquel cas il est acidifié par ajout d'H₂SO₄ pour amener son pH à une valeur inférieure à 1 et additionné de sulfate de sodium.

## Revendications

1. Procédé de récupération sélective d'au moins une terre rare présente dans un déchet choisi parmi les piles nickel-hydrure métallique et accumulateurs électrochimiques nickel-hydrure métallique usagés, qui comprend les étapes de :
a) dissolution du déchet sous forme divisée dans une solution aqueuse acide pour libérer la terre rare dans la solution aqueuse ;
b) précipitation de la terre rare sous la forme d'un sulfate double de terre rare et d'un métal autre qu'une terre rare; et
c) recueil du précipité ;
**caractérisé en ce que** les étapes a) et b) sont réalisées simultanément par immersion du déchet sous forme divisée dans une solution aqueuse S1 comprenant de l'acide sulfurique et un sulfate du métal autre que la terre rare et maintien du déchet dans cette solution pendant un temps t, la solution aqueuse S1 présentant un pH croissant en fonction du temps t entre une valeur initiale de pH, pHi, inférieure à 1 et une valeur finale de pH, pHf, au plus égale à 2.

2. Procédé selon la revendication 1, dans lequel le sulfate est un sulfate d'un métal alcalin, de préférence un sulfate de sodium ou de potassium.

3. Procédé selon la revendication 1 ou la revendication 2, dans lequel en ce que la solution aqueuse S1 comprend de 0,01 mole à 1 mole du sulfate par litre de solution.

4. Procédé selon l'une quelconque des revendications 1 à 3, dans lequel le déchet est sous la forme d'une poudre formée de particules dont la plus grande dimension est au plus égale à 500 µm.

5. Procédé selon l'une quelconque des revendications 1 à 4, **caractérisé en ce que**, préalablement à l'étape a), le procédé comprend les étapes de :
- application d'un traitement thermique au déchet,
- broyage du déchet pour obtenir le déchet sous forme divisée et, éventuellement, tamisage du broyat.

6. Procédé de valorisation d'un déchet choisi parmi les piles nickel-hydrure métallique et accumulateurs électrochimiques nickel-hydrure métallique usagés, qui comprend les étapes de :
i) récupération de la terre rare sous la forme d'un précipité de sulfate double de terre rare et d'un métal autre qu'une terre rare par un procédé selon l'une quelconque des revendications 1 à 5 ;
ii) dissolution du précipité de sulfate double dans une solution aqueuse S2 comprenant de l'acide oxalique, moyennant quoi on obtient un précipité d'oxalate de terre rare ;
iii) recueil du précipité d'oxalate de terre rare; et
iv) calcination du précipité de terre rare, moyennant quoi on obtient un oxyde de terre rare.

7. Procédé selon la revendication 6, dans lequel la solution aqueuse S2 comprend de 0,01 mole à 0,5 mole d'acide oxalique par litre de solution.

8. Procédé selon la revendication 6 ou la revendication 7, dans lequel l'étape iii) est réalisée à une température allant de 20°C à 80°C.

9. Procédé selon l'une quelconque des revendications 6 à 8, dans lequel l'étape iv) est réalisée sous air, à une température allant de 800°C à 1000°C.

## Patentansprüche

1. Verfahren zur selektiven Wiedergewinnung wenigstens einer seltenen Erde, die in einem Abfall vorhanden ist, ausgewählt aus den gebrauchten Nickel-Metallhydrid-Batterien und elektrochemischen Nickel-Metallhydrid-Akkumulatoren, das die folgenden Schritte umfasst:
a) Auflösen des Abfalls in verteilter Form in einer sauren wässrigen Lösung, um die seltene Erde in die wässrige Lösung freizusetzen;
b) Fällen der seltenen Erde in der Form eines Doppelsulfats der seltenen Erde und eines anderen Metalls als einer seltenen Erde; und
c) Sammeln der Ausfällung;
**dadurch gekennzeichnet, dass** die Schritte a) und b) gleichzeitig realisiert werden durch Eintauchen des Abfalls in verteilter Form in eine wässrige Lösung S1, die Schwefelsäure und ein Sulfat des anderen Metalls als der seltenen Erde enthält, und durch Halten des Abfalls in dieser Lösung während einer Zeit t, wobei die wässrige Lösung S1 einen pH aufweist, der als Funktion der Zeit t zwischen einem pH-Anfangswert, pHi, kleiner als 1 und einem pH-Endwert, pHf, höchstens gleich 2 ansteigt.

2. Verfahren nach Anspruch 1, bei dem das Sulfat ein Sulfat eines Alkalimetalls ist, vorzugsweise ein Natrium- oder Kaliumsulfat.

3. Verfahren nach Anspruch 1 oder Anspruch 2, bei dem die wässrige Lösung S1 von 0,01 Mol bis 1 Mol Sulfat pro Liter der Lösung enthält.

4. Verfahren nach einem der Ansprüche 1 bis 3, bei dem der Abfall in der Form eines Pulvers ist, das durch Partikel gebildet ist, deren größte Abmessung höchstens gleich 500 µm ist.

5. Verfahren nach einem der Ansprüche 1 bis 4, **dadurch gekennzeichnet, dass** das Verfahren vor dem Schritt a) die folgenden Schritte umfasst:
- Anwenden einer thermischen Behandlung auf den Abfall,
- Zerkleinern des Abfalls, um den Abfall in der verteilten Form zu erhalten, und gegebenenfalls Sieben des Zerkleinerungsergebnisses.

6. Verfahren zur Valorisierung eines Abfalls, der ausgewählt ist aus den gebrauchten Nickel-Metallhydrid-Batterien und elektrochemischen Nickel-Metallhydrid-Akkumulatoren, das die folgenden Schritte umfasst:
i) Wiedergewinnung der seltenen Erde in der Form einer Ausfällung von Doppelsulfat der seltenen Erde und eines anderen Metalls als einer seltenen Erde mittels eines Verfahrens nach einem der Ansprüche 1 bis 5;
ii) Auflösen der Ausfällung des Doppelsulfats in einer wässrigen Lösung S2, die Oxalsäure enthält, wodurch man eine Ausfällung von Oxalat der seltenen Erde erhält;
iii) Sammeln der Ausfällung von Oxalat der seltenen Erde; und
iv) Kalzinierung der Ausfällung der seltenen Erde, wodurch man ein Oxid der seltenen Erde erhält.

7. Verfahren nach Anspruch 6, bei dem die wässrige Lösung S2 von 0,01 Mol bis 0,5 Mol Oxalsäure pro Liter der Lösung enthält.

8. Verfahren nach Anspruch 6 oder Anspruch 7, bei dem der Schritt iii) bei einer Temperatur ausgeführt wird, die von 20°C bis 80°C geht.

9. Verfahren nach einem der Ansprüche 6 bis 8, bei dem der Schritt iv) an Luft bei einer Temperatur ausgeführt wird, die von 800°C bis 1000°C geht.

## Claims

1. A method for selectively recovering at least one rare earth present in waste selected from used nickel-metal hydride cells and used nickel-metal hydride electrochemical batteries, which comprises the steps of:
a) dissolving the waste in a divided form into an acidic aqueous solution to release the rare earth in the aqueous solution;
b) precipitating the rare earth as a double sulphate of rare earth and a metal other than a rare earth; and
c) collecting the precipitate;
**characterised in that** steps a) and b) are simultaneously performed by immersing the waste in a divided form into an aqueous solution S1 comprising sulphuric acid and a sulphate of the metal other than the rare earth and maintaining this waste in this solution for a time t, the aqueous solution S1 having an increasing pH as a function of time t between an initial pH value, pHi, lower than 1 and a final pH value, pHf, at most equal to 2.

2. The method according to claim 1, wherein the sulphate is an alkali metal sulphate, preferably a sodium or potassium sulphate.

3. The method according to claim 1 or claim 2, wherein the aqueous solution S1 comprises from 0.01 mole to 1 mole of sulphate per litre of solution.

4. The method according to any of claims 1 to 3, wherein the waste is in the form of a powder formed by particles the largest dimension of which is at most equal to 500 µm.

5. The method according to any of claims 1 to 4, **characterised in that**, prior to step a), the method comprises the steps of:
- applying a heat treatment to the waste,
- grinding the waste to obtain the waste in a divided form and, possibly, sieving the ground material.

6. A method for reclaiming a waste selected from used nickel-metal hydride cells and used nickel-metal hydride electrochemical batteries, which comprises the steps of:
i) recovering the rare earth as a double sulphate precipitate of rare earth and of a metal other than rare earth by a method according to any of claims 1 to 5;
ii) dissolving the double sulphate precipitate into an aqueous solution S2 comprising oxalic acid, whereby a rare earth oxalate precipitate is obtained;
iii) collecting the rare earth oxalate precipitate; and
iv) calcinating the rare earth precipitate, whereby a rare earth oxide is obtained.

7. The method according to claim 6, wherein the aqueous solution S2 comprises from 0.01 mole to 0.5 mole of oxalic acid per litre of solution.

8. The method according to claim 6 or claim 7, wherein step iii) is performed at a temperature ranging from 20 °C to 80 °C.

9. The method according to any of claims 6 to 8, wherein step iv) is performed under the air, at a temperature ranging from 800 °C to 1000 °C.
